# EUROPÄISCHE PATENTANMELDUNG

(11) **EP 0 838 967 A2**
(43) Veröffentlichungstag der Anmeldung: **29.04.1998**
(21) Anmeldenummer: 97117411.5
(22) Anmeldetag: 08.10.1997
(51) Int. Cl.: H04Q 7/38, H04Q 7/24

(54) **Verfahren zum ortsabhängigen Anmelden eines mobilen Endgerätes an einer Basisstation eines Kommunikationsnetzes**

(30) Priorität: 23.10.1996 DE 19643722
(71) Anmelder: SIEMENS AKTIENGESELLSCHAFT, 80333 München (DE)
(72) Erfinder: Morper, Hans-Jochen, 85253 Erdweg (DE)

(57) **Zusammenfassung**

Verfahren zum ortsabhängigen Anmelden eines mobilen Endgerätes an einem Kommunikationsnetz, wobei dem Endgerät eine allgemeine Benutzeridentifikation zugeordnet ist und von einem Kommunikationsnetz beim ortsabhängigen Anmelden eine für das Kommunikationsnetz gültige temporäre Benutzerkennung zugeordnet wird und wobei das Endgerät im Rahmen eines ortsabhängigen Anmeldens zur Identifizierung des Endgerätes wahlweise seine allgemeine Benutzerkennung oder seine temporäre Benutzerkennung sendet, wobei entweder im Endgerät festgestellt wird, ob die Basisstation auf der Grundlage eines digitalen Mobilfunkstandards arbeitet und daß das Endgerät nur bei einer Basisstation gemäß diesem Mobilfunkstandard ein ortsabhängiges Anmelden unter Verwendung der temporären Benutzerkennung durchführt, oder das Endgerät beim ortsabhängigen Anmelden an einer Basisstation, die gemäß dem Schnurlosstandard arbeitet, nur dann die temporäre Benutzeridentität zur Basisstation übermittelt, wenn es sich um ein erstmaliges ortsabhängiges Anmelden in einem besuchten Kommunikationsnetz handelt oder aber die Basisstation innerhalb der periodisch ausgestrahlten Funkstationskennungen und/oder innerhalb ihrer periodisch ausgestrahlten Sekundärzugriffskennungen eine Information ausstrahlt, die angibt, ob ein ortsabhängiges Anmelden mit einer temporären Benutzeridentifikation erlaubt ist und das Endgerät abhängig von dieser Information beim ortsabhängigen Anmelden an die Basisstation die temporäre Benutzerkennung oder die allgemeine Benutzerkennung übermittelt.

## Beschreibung

Die Erfindung betrifft ein Verfahren zum ortsabhängigen Anmelden, auch Roaming genannt, eines mobilen Endgerätes über eine Luftschnittstelle an einer Basisstation eines Kommunikationsnetzes nach dem Oberbegriff des Anspruches 1.

Solche Verfahren sind hinlänglich zum Anmelden von mobilen Endgeräten nach internationalen Schnurlosstandards wie z.B. dem digitalen erweiterten Schnurlosstandard DECT und auch zum Anmelden von Endgeräten nach digitalen Mobilfunkstandards wie z.B. dem Standard GSM900 oder dem Standard DCS1800 bekannt.

Mittlerweile gibt es auch Kommunikationsendgeräte, die ein ortsabhängiges Anmelden sowohl an einer Basisstation gemäß einem Mobilfunkstandard als auch an einer Basisstation gemäß einem Schnurlosstandard erlauben.

Wenn eine Mobilstation, d.h. ein Endgerät, eines digitalen Mobilfunknetzes, beispielsweise GSM aus dem Bereich einer Basisstation VLR in den Bereich einer anderen Basisstation VLR desselben Netzes wechselt, wird das ortsabhängige Anmelden bei dieser neuen Basisstation VLR unter Verwendung einer von der vorherigen Basisstation VLR vergebenen temporären Benutzerkennung TMSI (Temorare Mobile Station Indicator) durchgeführt. Die vorhergehende Ortsangabe ermöglicht zusammen mit der temporären Benutzerkennung TMSI das Ermitteln der Kennungen im Netz, so daß die unverschlüsselte Übertragung der allgemeinen Benutzerkennung IMSI nicht erforderlich ist. Wenn jedoch das Endgerät in den Sende-/Empfangsbereich einer Basisstation VLR eines besuchten Netzes wechselt, ist das Aussenden der temporären Benutzerkennung TMSI nicht ausreichend, so daß eine Kennungsanfrage die unverschlüsselte Übertragung der allgemeinen Benutzerkennung IMSI erforderlich macht.

Gemäß dem derzeitigen Schnurlosstandard DECT sendet ein Endgerät beim ortsabhängigen Anmelden immer die allgemeine Benutzerkennung IPUI. In einem Mobilfunknetz, beispielsweise gemäß dem Standard GSM, das einen Zugriff über eine DECT-Schnittstelle erlaubt, können viele DECT-Basisstationsbereiche von einer Mobilfunk-Basisstation VLR gesteuert werden. Hierbei kann das unverschlüsselte Senden der allgemeinen Benutzerkennung IPUI bei jedem Wechsel des DECT-Basisstationsbereichs beispielsweise bei der Verwendung von Dual-Mode-Endgeräten zu einem unverschlüsselten Senden der allgemeinen Benutzerkennung IMSI des Mobilfunknetzes führen.

Da das Management der temporären Benutzeridentität TPUI in solchen Fällen von der übergeordneten Basisstation VLR des Mobilfunknetzes gesteuert wird, würde in solchen Fällen das Übertragen der temporären Benutzerkennung TPUI vom Endgerät zur Basisstation ausreichen.

Wenn jedoch zwischen einem Mobilfunknetzbetreiber mit dem Betreiber eines öffentlichen Kommunikationsnetzes oder eines Firmennetzes besteht, aufgrund dessen Endgeräte in beiden Netzen zugriffsberechtigt sind, reicht das Senden der temporären Benutzerkennung TPUI nicht aus, weil diese temporären Benutzerkennung TPUI nur für einen Schnurlos-Sende-/Empfangsbereich einheitlich sein kann. In diesem Fall führt die Verwendung der temporären Benutzeridentifikation TPUI bei jedem ortsabhängigen Anmelden zum Anfordern der allgemeinen Benutzeridentifikation IPUI. Da die Sende-/Empfangsbereiche von Schnurlosbasisstationen sehr begrenzt sind, kann dadurch ein erheblicher Signalisierungsaufwand entstehen.

Aufgabe der Erfindung ist es, nicht GSM-basierte CTM-Netze von überflüssigem Signalisierungsverkehr aufgrund nicht ausreichender Identifikation von Dual-Mode-Endgeräten gemäß einem Schnurlosstandard und einem Mobilfunkstandard zu entlasten.

Diese Aufgabe löst die Erfindung durch ein Verfahren mit den Merkmalen des Anspruches 1, durch ein Verfahren mit den Merkmalen des Anspruches 3 oder durch ein Verfahren mit den Merkmalen des Anspruches 5.

Bei einem Verfahren zum ortsabhängigen Anmelden eines mobilen Endgerätes über eine Luftschnittstelle an einer Basisstation eines Kommunikationsnetzes, wobei dem Endgerät eine allgemeine Benutzeridentifikation, beispielsweise IPUI oder IMSI, zugeordnet ist und wobei dem Endgerät von einem Kommunikationsnetz beim ortsabhängigen Anmelden über eine der Basisstationen dieses Kommunikationsnetzes eine für das Kommunikationsnetz gültige temporäre Benutzerkennung beispielsweise TMSI oder TPUI, zugeordnet wird und wobei das Endgerät der Basisstation im Rahmen eines ortsabhängigen Anmeldens zur Identifizierung des Endgerätes wahlweise seine allgemeine Benutzerkennung oder seine temporäre Benutzerkennung übermittelt, und wobei die Basisstation periodisch eine Funkstationskennung aussendet, woraufhin im Endgerät gespeicherte Subskriptionsdaten mit der Funkstationskennung verglichen werden, um eine Zugriffsberechtigung des Endgerätes festzustellen und im Kommunikationsnetz die Benutzerkennung des Endgerätes mit in dem Kommunikationsnetz gespeicherten Subskriptionsdaten verglichen werden, um eine Zugriffsberechtigung des Endgerätes auf das Kommunikationsnetz festzustellen, wird erfindungsgemäß im Endgerät festgestellt, ob die Basisstation auf der Grundlage eines digitalen Mobilfunkstandards GSM, DCS1800 arbeitet und daß das Endgerät führt nur bei einer Basisstation gemäß diesem Mobilfunkstandard GSM, DCS1800 ein ortsabhängiges Anmelden unter Verwendung der temporären Benutzerkennung durch.

Hierbei kann das Endgerät vorzugsweise anhand der Zugriffsrechtsidentifikationsklasse, z.B. der ARI-Klasse D für GSM-Netze, der von der Basisstation ausgesandten Funkstationskennung RFPI (Radio Fixed Part Identity) feststellen, ob die Basisstation gemäß dem digitalen Mobilfunkstandard GSM bzw. DCS1800 arbeitet.

Bei einem anderen Verfahren zum ortsabhängigen Anmelden eines mobilen Endgerätes über eine Luftschnittstelle an einer Basisstation eines Kommunikationsnetzes, wobei dem Endgerät eine allgemeine Benutzeridentifikation IPUI, IMSI zugeordnet ist und wobei dem Endgerät von einem Kommunikationsnetz beim ortsabhängigen Anmelden über eine der Basisstationen dieses Kommunikationsnetzes eine für das Kommunikationsnetz gültige temporäre Benutzerkennung TMSI, TPUI zugeordnet wird und wobei das Endgerät der Basisstation im Rahmen eines ortsabhängigen Anmeldens zur Identifizierung des Endgerätes wahlweise seine allgemeine Benutzerkennung IMSI, IPUI oder seine temporäre Benutzerkennung TMSI, TPUI übermittelt, und wobei die Basisstation periodisch eine Funkstationskennung aussendet, woraufhin im Endgerät gespeicherte Subskriptionsdaten mit der Funkstationskennung verglichen werden, um eine Zugriffsberechtigung des Endgerätes festzustellen und im Kommunikationsnetz die Benutzerkennung TMSI, IMSI, IPUI, TPUI des Endgerätes mit in dem Kommunikationsnetz gespeicherten Subskriptionsdaten verglichen werden, um eine Zugriffsberechtigung des Endgerätes auf das Kommunikationsnetz festzustellen, übermittelt das Endgerät beim ortsabhängigen Anmelden an einer Basisstation, die gemäß dem Schnurlosstandard DECT arbeitet, nur dann die temporäre Benutzeridentität TPUI, TMSI zur Basisstation, wenn es sich um ein erstmaliges ortsabhängiges Anmelden in einem besuchten Kommunikationsnetz handelt.

In einer vorteilhaften Ausgestaltung eines solchen Verfahrens erkennt das Endgerät das erstmalige ortsabhängige Anmelden an einem besuchten Kommunikationsnetz aufgrund eines Zugriffes über eine Sekundärzugriffskennung SARI, TARI.

Bei einem weiteren Verfahren zum ortsabhängigen Anmelden eines mobilen Endgerätes über eine Luftschnittstelle an einer Basisstation eines Kommunikationsnetzes, wobei dem Endgerät eine allgemeine Benutzeridentifikation IPUI, IMSI zugeordnet ist und wobei dem Endgerät von einem Kommunikationsnetz beim ortsabhängigen Anmelden über eine der Basisstationen dieses Kommunikationsnetzes eine für das Kommunikationsnetz gültige temporäre Benutzerkennung TMSI, TPUI zugeordnet wird und wobei das Endgerät der Basisstation im Rahmen eines ortsabhängigen Anmeldens zur Identifizierung des Endgerätes wahlweise seine allgemeine Benutzerkennung IMSI, IPUI oder seine temporäre Benutzerkennung TMSI, TPUI übermittelt, und wobei die Basisstation periodisch eine Funkstationskennung aussendet, woraufhin im Endgerät gespeicherte Subskriptionsdaten mit der Funkstationskennung verglichen werden, um eine Zugriffsberechtigung des Endgerätes festzustellen und im Kommunikationsnetz die Benutzerkennung TMSI, IMSI, IPUI, TPUI des Endgerätes mit in dem Kommunikationsnetz gespeicherten Subskriptionsdaten verglichen werden, um eine Zugriffsberechtigung des Endgerätes auf das Kommunikationsnetz festzustellen, sendet die Basisstation innerhalb der periodisch ausgestrahlten Funkstationskennungen und/oder innerhalb ihrer periodisch ausgestrahlten Sekundärzugriffskennungen eine Information, die angibt, ob ein ortsabhängiges Anmelden mit einer temporären Benutzeridentifikation TPUI, TMSI erlaubt ist und das Endgerät übermittelt abhängig von dieser Information beim ortsabhängigen Anmelden an die Basisstation die temporäre Benutzerkennung TPUI, TMSI oder die allgemeine Benutzerkennung IPUI, IMSI.

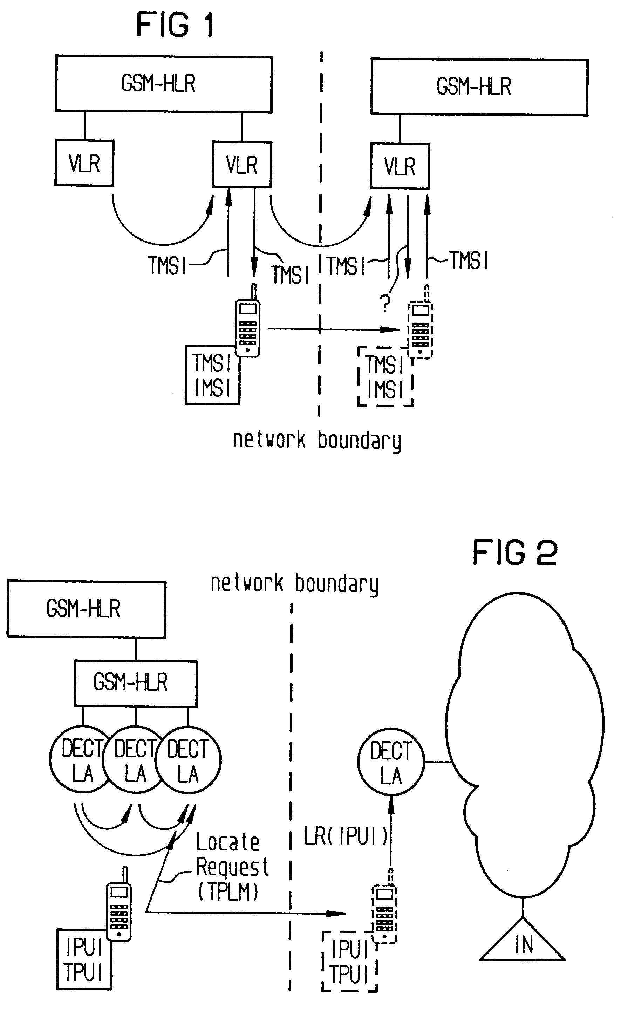

Die Figur 1 zeigt das ortsabhängige Anmelden eines Endgerätes nach dem GSM-Standard an Basisstationen unterschiedlicher Netze und
die Figur 2 zeigt zeigt das ortsabhängige Anmelden eines Endgerätes nach dem DECT-Standard an Basisstationen unterschiedlicher Netze, wobei ein Teil der Basisstationen nach dem DECT-Standard im Rahmen eines GSM-gestützten CTM einer Basisstation des GSM-Netzes untergeordnet sind.

## Patentansprüche

1. Verfahren zum ortsabhängigen Anmelden eines mobilen Endgerätes über eine Luftschnittstelle an einer Basisstation eines Kommunikationsnetzes, wobei dem Endgerät eine allgemeine Benutzeridentifikation (IPUI, IMSI) zugeordnet ist und wobei dem Endgerät von einem Kommunikationsnetz beim ortsabhängigen Anmelden über eine der Basisstationen dieses Kommunikationsnetzes eine für das Kommunikationsnetz gültige temporäre Benutzerkennung (TMSI, TPUI) zugeordnet wird und wobei das Endgerät der Basisstation im Rahmen eines ortsabhängigen Anmeldens zur Identifizierung des Endgerätes wahlweise seine allgemeine Benutzerkennung (IMSI, IPUI) oder seine temporäre Benutzerkennung (TMSI, TPUI) übermittelt, und wobei die Basisstation periodisch eine Funkstationskennung aussendet, woraufhin im Endgerät gespeicherte Subskriptionsdaten mit der Funkstationskennung verglichen werden, um eine Zugriffsberechtigung des Endgerätes festzustellen und im Kommunikationsnetz die Benutzerkennung (TMSI, IMSI, IPUI, TPUI) des Endgerätes mit in dem Kommunikationsnetz gespeicherten Subskriptionsdaten verglichen werden, um eine Zugriffsberechtigung des Endgerätes auf das Kommunikationsnetz festzustellen, dadurch **gekennzeichnet**, daß im Endgerät festgestellt wird, ob die Basisstation auf der Grundlage eines digitalen Mobilfunkstandards (GSM, DCS1800) arbeitet und daß das Endgerät nur bei einer Basisstation gemäß diesem Mobilfunkstandard (GSM, DCS1800) ein ortsabhängiges Anmelden unter Verwendung der temporären Benutzerkennung (TPUI, TMSI) durchführt.

2. Verfahren nach Anspruch 1, dadurch **gekennzeichnet**, daß das Endgerät anhand der Zugriffsrechtsidentifikationsklasse (ARI-Klasse D) der von der Basisstation ausgesandten Funkstationskennung (RFPI) feststellt, ob die Basisstation gemäß dem digitalen Mobilfunkstandard (GSM, DCS1800) arbeitet.

3. Verfahren zum ortsabhängigen Anmelden eines mobilen Endgerätes über eine Luftschnittstelle an einer Basisstation eines Kommunikationsnetzes, wobei dem Endgerät eine allgemeine Benutzeridentifikation (IPUI, IMSI) zugeordnet ist und wobei dem Endgerät von einem Kommunikationsnetz beim ortsabhängigen Anmelden über eine der Basisstationen dieses Kommunikationsnetzes eine für das Kommunikationsnetz gültige temporäre Benutzerkennung (TMSI, TPUI) zugeordnet wird und wobei das Endgerät der Basisstation im Rahmen eines ortsabhängigen Anmeldens zur Identifizierung des Endgerätes wahlweise seine allgemeine Benutzerkennung (IMSI, IPUI) oder seine temporäre Benutzerkennung (TMSI, TPUI) übermittelt, und wobei die Basisstation periodisch eine Funkstationskennung aussendet, woraufhin im Endgerät gespeicherte Subskriptionsdaten mit der Funkstationskennung verglichen werden, um eine Zugriffsberechtigung des Endgerätes festzustellen und im Kommunikationsnetz die Benutzerkennung (TMSI, IMSI, IPUI, TPUI) des Endgerätes mit in dem Kommunikationsnetz gespeicherten Subskriptionsdaten verglichen werden, um eine Zugriffsberechtigung des Endgerätes auf das Kommunikationsnetz festzustellen, dadurch **gekennzeichnet**, daß das Endgerät beim ortsabhängigen Anmelden an einer Basisstation, die gemäß dem Schnurlosstandard (DECT) arbeitet, nur dann die temporäre Benutzeridentität (TPUI, TMSI) zur Basisstation übermittelt, wenn es sich um ein erstmaliges ortsabhängiges Anmelden in einem besuchten Kommunikationsnetz handelt.

4. Verfahren nach Anspruch 3, dadurch **gekennzeichnet**, daß das Endgerät das erstmalige ortsabhängige Anmelden an einem besuchten Kommunikationsnetz aufgrund eines Zugriffes über eine Sekundärzugriffskennung (SARI, TARI) erkennt.

5. Verfahren zum ortsabhängigen Anmelden eines mobilen Endgerätes über eine Luftschnittstelle an einer Basisstation eines Kommunikationsnetzes, wobei dem Endgerät eine allgemeine Benutzeridentifikation (IPUI, IMSI) zugeordnet ist und wobei dem Endgerät von einem Kommunikationsnetz beim ortsabhängigen Anmelden über eine der Basisstationen dieses Kommunikationsnetzes eine für das Kommunikationsnetz gültige temporäre Benutzerkennung (TMSI, TPUI) zugeordnet wird und wobei das Endgerät der Basisstation im Rahmen eines ortsabhängigen Anmeldens zur Identifizierung des Endgerätes wahlweise seine allgemeine Benutzerkennung (IMSI, IPUI) oder seine temporäre Benutzerkennung (TMSI, TPUI) übermittelt, und wobei die Basisstation periodisch eine Funkstationskennung aussendet, woraufhin im Endgerät gespeicherte Subskriptionsdaten mit der Funkstationskennung verglichen werden, um eine Zugriffsberechtigung des Endgerätes festzustellen und im Kommunikationsnetz die Benutzerkennung (TMSI, IMSI, IPUI, TPUI) des Endgerätes mit in dem Kommunikationsnetz gespeicherten Subskriptionsdaten verglichen werden, um eine Zugriffsberechtigung des Endgerätes auf das Kommunikationsnetz festzustellen, dadurch **gekennzeichnet**, daß die Basisstation innerhalb der periodisch ausgestrahlten Funkstationskennungen und/oder innerhalb ihrer periodisch ausgestrahlten Sekundärzugriffskennungen eine Information ausstrahlt, die angibt, ob ein ortsabhängiges Anmelden mit einer temporären Benutzeridentifikation (TPUI, TMSI) erlaubt ist und daß das Endgerät abhängig von dieser Information beim ortsabhängigen Anmelden an die Basisstation die temporäre Benutzerkennung (TPUI, TMSI) oder die allgemeine Benutzerkennung (IPUI, IMSI) übermittelt.
